# EUROPEAN PATENT APPLICATION

(11) **EP 1 986 366 A1**
(43) Date of publication of application: **29.10.2008**
(21) Application number: 06713663.0
(22) Date of filing: 14.02.2006
(51) Int. Cl.: H04L 9/32

(54) **ELECTRONIC BIDDING/BIDDING OPENING PROGRAM, ELECTRONIC BIDDING/BIDDING OPENING SYSTEM, AND ELECTRONIC BIDDING/BIDDING OPENING METHOD**

(71) Applicant: Fujitsu Ltd., Kawasaki-shi, Kanagawa 211-8588 (JP)
(72) Inventor: YOSHIOKA, Takashi, Kawasaki-shi, Kanagawa 211-8588 (JP)
(74) Representative: Fenlon, Christine Lesley
(86) International application number: PCT/JP2006/302522
(87) International publication number: WO 2007/094043

(57) **Abstract**

An electronic bidding/bid opening program and the like that can verify validity of bidding information, and prove whether the bidding information has been falsified or not. Bidding information, partial identification information that shows each section of the bidding information in a manner identifiable from other sections, a plurality of pieces of information obtained by coding a plurality of suitable places in the bidding information, and information obtained by adding a signature of a person in charge of accepting to information obtained by coding the partial identification information and an amount are obtained. Then, predetermined validity with respect to successful bid processing is verified based on a predetermined combination of any of the plurality of pieces of information.

## Description

### Technical Field

The present invention relates to an electronic bidding/bid opening program, an electronic bidding/bid opening system, and an electronic bidding/bid opening method that can verify validity of bidding information, and also prove whether bidding information has been falsified or not when an electronic document distributes a plurality of entities.

### Background Art

Along with progress in IT in recent years, forms of an administrative document and an account book, a contract document, and the like of a private company are gradually shifting from management and storage by using paper documents as a conventional manner to use of electronic (digital) documents. More specifically, along with widespread use of scanner devices, a document which has been conventionally stored by using paper can be easily converted to electronic data. Further, along with application of an image scanner including high resolution, electronic archiving of paper documents which was not permitted in the past have become permitted when a certain security requirement is satisfied (according to e-Document Law which came into effect in April, 2005).

On the other hand, along with increase in request of electronic archiving of documents described above, the need for technology that allows secure storage and management of an electronic document has been increasing. In order to electronically store a document, which has been stored as paper, in a state where evidential capacity equivalent to that of paper is maintained, technological requirements, such as "detection of falsification", "prevention of falsification", "identification of author", "management or control of access", and "management of history", are considered to be necessarily satisfied. In order to satisfy requirements such as above, a conventional document management system is functionally insufficient. Accordingly, development of an "original assurance system" satisfying such technological requirements, and introduction of such a system on the market have been progressing rapidly.

In the "original assurance system", security element techniques that are most commonly used include digital signature and time stamp. The digital signature is a technique that allows identification of an author (personal identification) of a document, and at the same time, can prove to a third party and allows a third party to check that the document has not been modified since creation of the document (no falsification). In addition, the time stamp includes a function of the digital signature, and also includes a function that can demonstrate confirmation time of an electronic document.

A conventional idea of original assurance realized by using the techniques as described above is targeted for a document with a clear location of the original as similar to a case of storing a paper document in a locked storeroom, since a document of a confirmed final form is securely managed as the original. Under an environment as described above, the electronic signature and the time stamp are very effective techniques for assuring personal identification and no falsification (for example, refer to Patent Documents 1 and 2, and Non-Patent Document 1 described below).

Patent Documents 1 and 2 are techniques that secure the original of an electronic document. In addition, Non-Patent Document 1 is a technique that resolves a sanitizing problem of an electronic document. In addition, Patent Document 2 suggests an electronic document sanitizing technique that enables control of application of additional sanitization with respect to a disclosed section.
Patent Document 1: Jpn. Pat. Appln. Laid-Open Publication No. 2000-285034
Patent Document 2: Jpn. Pat. Appln. Laid-Open Publication No. 2001-117820
Non-Patent Document 1: "Digital Document Sanitizing Problem (2003/7/17) (2003-CSEC-22-009)", paper of Information Processing Society of Japan, Computer Security Group (CSEC).
Non-Patent Document 2: "A Digital Document Sanitizing Scheme with Disclosure Condition Control", paper of SCIS2004.

### Disclosure of the Invention

### Problems to be Solved by the Invention

However, in case consideration is made with respect to original assurance of a document which is circulated around places and applied with partial manipulation, such as addition, correction, and concealment directly to the document, such as an application and a request for managerial decision, no modification is permitted in general electronic signature and time stamp systems by their nature, and this becomes an obstacle. In the conventional techniques described above, the points as described above are not taken into consideration, and a focus has been mainly paid on a technique that uses the electronic signature to store electronic data in a complete form. That is, when a document with the electronic signature is partly modified, verification of signature fails. As a result, integrity of a partly-modified document has not been able to be assured.

In addition, as a method for avoiding the above problem, a partly-modified document is updated as a new edition, and the electronic signature is provided to the partly-modified document. In this manner, signature verification succeeds. However, falsification (modification) other than a modified section could not be detected. As a case of a valid modification, there is sanitizing processing of non-disclosure section based on Information Disclosure Law and Private Information Protection Law. However, there has been a problem that other disclosed sections that are falsified simultaneously with the sanitizing processing cannot be detected.

In addition, as current problems of an electronic bidding/bid opening system, there are problems of (1) collusion between a person in charge of accepting a bid and a bidder, (2) collusion between a person in charge of bid opening and a bidder, (3) negligence of privacy at the time of opening bidding information, and the like.

First, with respect to (1) collusion between a person in charge of accepting a bid and a bidder, a case such as one described below is considered.

A person in charge of accepting a bid and a company B are assumed to collude with each other. In this case, the person in charge of accepting a bid instructs the company B to hold bidding action until the last minute before closing time. Then, the person in charge of accepting a bid judges ¥3,000 bid by a company C as a lowest bid, and notifies the company B of the lowest bid. Then, the company B bids ¥2,000 that is lower than the lowest bid. In this manner, the person in charge of accepting a bid allows the company B to win the bid by the fraudulent act. This fraudulent act occurs due to the fact that the person in charge of accepting a bid can refer to amounts bid by other bidders (company A and company C) in advance.

Next, with respect to (2) collusion between a person in charge of bid opening and a bidder, a case such as one described below is considered.

For example, in a case of a collusion between the person in charge of bid opening and the company B is considered, a successful bidder is a company C that bid the lowest amount of ¥3,000. However, the person in charge of bid opening rewrites the bid amount of the company B to ¥2,000 that is even lower than the lowest amount of ¥3,000. In this manner, the person in charge of bid opening intentionally allows the company B to win the bid by the fraudulent act. This fraudulent act occurs also due to the fact that the person in charge of bid opening can refer to amounts bid by other bidders (company A and company C) in advance. In addition, whether information at the time of bidding is properly used or not is not necessarily checked, and this is considered as one of the reasons.

Finally, with respect to (3) negligence of privacy at the time of opening bidding information, when bidding information is opened to a third party, such as a reader, information of other bidders than a successful bidder is all disclosed. Accordingly, at present, protection of privacy information is not considered. In view of Personal Information Protection Law come into force in April 2005, such bidding information is an item that should not be disclosed for obvious reasons. In addition, as a countermeasure for the above problem, consideration is made to open privacy information to a third party after part of the privacy information is sanitized. However, as described above, disclosed sections falsified simultaneously with sanitizing processing cannot be detected in the conventional techniques. Accordingly, a problem that whether bid opening processing has been carried out by properly using information at the time of bidding or not cannot be judged is left unsolved.

The present invention has been made so as to solve the conventional problems described above. The present invention provides an electronic bidding/bid opening program, an electronic bidding/bid opening system, and a electronic bidding/bid opening method that can prevent (detect) collusion and fraudulent act between and by a bidder and a person in charge of accepting a bid, and a bidder and a person in charge of bid opening. In addition, the present invention provides an electronic bidding/bid opening program, an electronic bidding/bid opening system, and an electronic bidding/bid opening method that can verify that bid opening processing is carried out properly by using information at the time of bidding. Further, the present invention provides an electronic bidding/bid opening program, an electronic bidding/bid opening system, and a electronic bidding/bid opening method that can verify validity of a result of bid opening even if part of information is concealed. Further, an object of the present invention is to provide an electronic bidding/bid opening program, an electronic bidding/bid opening system, and a electronic bidding/bid opening method that can verify that "when" and "who" did modification on "what" and "how", and also "which section was modified".

### Means for Solving the Problems

In order to achieve the above object, according to the present invention, there is provided an electronic bidding/bid opening program that allows a computer to execute bidding and bid opening processing based on bidding information created in electronic data. The electronic bidding/bid opening program allows a computer to execute a first edition information acquiring step that acquires the bidding information and partial identification information showing each section of the bidding information that can be identified by other sections, and registers the bidding information and the partial identification information as first edition bidding information and first edition partial identification information, respectively. Also, the electronic bidding/bid opening program allows a computer to execute a second edition information acquiring step that acquires and registers second (a) edition bidding information obtained by coding a bidding amount section in the first edition bidding information acquired by the first edition information acquiring step and second (a) edition partial identification information showing each section of the second (a) edition bidding information in a manner identifiable from other sections, and second (b) edition bidding information obtained by coding a bidder section in the first edition bidding information and second (b) edition partial identification information showing each section of the second (b) edition bidding information in a manner identifiable from other sections. Also, the electronic bidding/bid opening program allows a computer to execute a third edition information acquiring step that acquires and registers third edition bidding information obtained by applying an electronic signature by a person in charge of accepting a bid with respect to the second (a) edition bidding information acquired by the second edition information acquiring step, and partial identification information showing each section of the third edition bidding information in a manner identifiable from other sections. Also, the electronic bidding/bid opening program allows a computer to execute a fourth edition information acquiring step that acquires and registers fourth edition bidding information obtained by coding a bidder section in the third edition bidding information acquired by the third edition information acquiring step and fourth edition partial identification information that shows each section of the fourth edition bidding information in a manner identifiable from other sections. Also, the electronic bidding/bid opening program allows a computer to execute a verification step that verifies predetermined validity with respect to successful bid processing by a predetermined combination of information of any of a plurality of pieces of edition information acquired by the first to fourth edition information acquiring steps.

In addition, in the electronic bidding/bid opening program of the present invention, the verification step verifies a bidding amount at the time of bid opening based on the fourth edition bidding information acquired by the fourth edition information acquiring step and the second (b) edition partial identification information acquired by the second edition information acquiring step.

In the electronic bidding/bid opening program of the present invention, the verification step decodes a bidding amount section in the fourth edition bidding information acquired by the fourth edition information acquiring step and acquires partial identification information of the bidding amount section to compare the partial identification information with the second (b) partial identification information.

In the electronic bidding/bid opening program of the present invention, an electronic signature or a time stamp is attached to the information acquired in each of the information acquiring steps. Also, the verification step uses the electronic signature or the time stamp to detect existence or non-existence of falsification.

In the electronic bidding/bid opening program of the present invention, the verification step discloses or does not disclose part of information depending on a successful bidder and bidders other than the successful bidder with respect to a result of a successful bid, and supports confirmation of validity of the information.

In the electronic bidding/bid opening program of the present invention, an electronic signature or a time stamp is attached to all the information acquired in each of the information acquiring steps. The verification step uses the first edition partial identification information, the second (a) edition partial identification information, the second (b) edition partial identification information, the third edition partial identification information, the fourth edition bidding information, and the fourth edition partial identification information to carry out verification for audit.

In the electronic bidding/bid opening program of the present invention, the partial identification information is acquired as hash information generated in a manner that bidding information is divided into a plurality of sections, and information of each section is generated by using a one-way hash function.

According to the present invention, there is provided an electronic bidding/bid opening system that executes bidding and bid opening processing based on bidding information created in electronic data. The electronic bidding/bid opening system includes a first edition information acquisition section that acquires the bidding information and partial identification information showing each section of the bidding information that can be identified by other sections, and registers the bidding information and the partial identification information as first edition bidding information and first edition partial identification information, respectively. Also, the electronic bidding/bid opening system includes a second edition information acquisition section that acquires and registers second (a) edition bidding information obtained by coding a bidding amount section in the first edition bidding information acquired by the first edition information acquisition section and second (a) edition partial identification information showing each section of the second (a) bidding information in a manner identifiable from other sections, and second (b) edition bidding information obtained by coding a bidder section in the first edition bidding information and second (b) edition partial identification information showing each section of the second (b) edition bidding information in a manner identifiable from other sections. Also, the electronic bidding/bid opening system includes a third edition information acquisition section that acquires and registers third edition bidding information obtained by applying an electronic signature by a person in charge of accepting a bid with respect to the second (a) edition bidding information acquired by the second edition information acquisition section, and partial identification information showing each section of the third edition bidding information in a manner identifiable from other sections. Also, the electronic bidding/bid opening system includes a fourth edition information acquisition section that acquires and registers fourth edition bidding information obtained by coding a bidder section in the third edition bidding information acquired by the third edition information acquisition section and fourth edition partial identification information that shows each section of the fourth edition bidding information in a manner identifiable from other sections. Also, the electronic bidding/bid opening system includes a verification section that verifies predetermined validity with respect to successful bid processing by a predetermined combination of information of any of a plurality of pieces of edition information acquired by the first to fourth edition information acquisition section.

According to the present invention, there is provided an electronic bidding/bid opening method that allows a computer to execute bidding and bid opening processing based on bidding information created in electronic data. The electronic bidding/bid opening method includes a first edition information acquiring step that acquires the bidding information and partial identification information showing each section of the bidding information that can be identified by other sections, and registers the bidding information and the partial identification information as first edition bidding information and first edition partial identification information, respectively. Also, the electronic bidding/bid opening method includes a second edition information acquiring step that acquires and registers second (a) edition bidding information obtained by coding a bidding amount section in the first edition bidding information acquired by the first edition information acquiring step and second (a) edition partial identification information showing each section of the second (a) bidding information in a manner identifiable from other sections, and second (b) edition bidding information obtained by coding a bidder section in the first edition bidding information and second (b) edition partial identification information showing each section of the second (b) edition bidding information in a manner identifiable from other sections. Also, the electronic bidding/bid opening method includes a third edition information acquiring step that acquires and registers third edition bidding information obtained by applying an electronic signature by a person in charge of accepting a bid with respect to the second (a) edition bidding information acquired by the second edition information acquiring step, and partial identification information showing each section of the third edition bidding information in a manner identifiable from other sections. Also, the electronic bidding/bid opening method includes a fourth edition information acquiring step that acquires and registers fourth edition bidding information obtained by coding a bidder section in the third edition bidding information acquired by the third edition information acquiring step and fourth edition partial identification information that shows each section of the fourth bidding information in a manner identifiable from other sections. Also, the electronic bidding/bid opening method includes a verification step that verifies predetermined validity with respect to successful bid processing by a predetermined combination of information of any of a plurality of pieces of edition information acquired by the first to the fourth edition information acquiring steps.

### Brief Description of the Drawings

FIG. 1 is a block diagram showing an embodiment of the present invention;
FIG. 2 is an explanatory view showing an outline of the embodiment of the present invention;
FIG. 3 is a flowchart showing operation of the embodiment of the present invention;
FIG. 4 is a view showing a first edition information acquiring step;
FIG. 5 is a view showing a second (a) edition information acquiring step;
FIG. 6 is a view showing a second (b) edition information acquiring step;
FIG. 7 is a view showing a third edition information acquiring step;
FIG. 8 is a view showing a storage state of acquired information in database;
FIG. 9 is a view showing a fourth edition information acquiring step;
FIG. 10 is a view showing a bidding amount decoding step;
FIG. 11 is a view showing a bidding amount verification step at the time of opening bids;
FIG. 12 is a view showing a successful bidder confirmation processing;
FIG. 13 is a view showing a disclosed information decoding step before opening a result of successful bidding;
FIG. 14 is a view showing a verification step at the time of opening a result of successful bidding;
FIG. 15 is a view showing an audit step; and
FIG. 16 is a view showing an advantageous effect of the embodiment of the present invention.

### Best Mode for Carrying Out the Invention

Hereinafter, an embodiment of the present invention will be described with reference to the accompanying drawings.

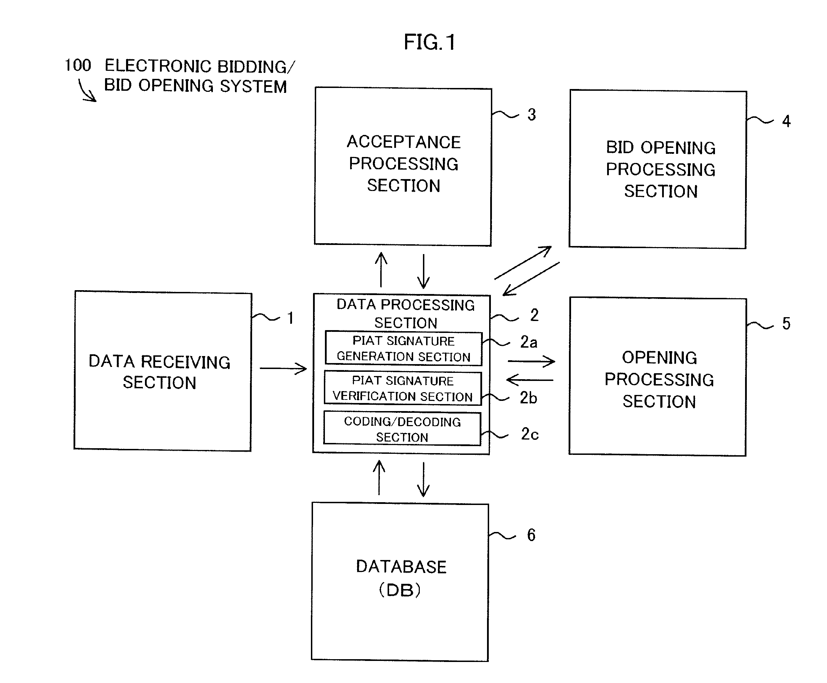

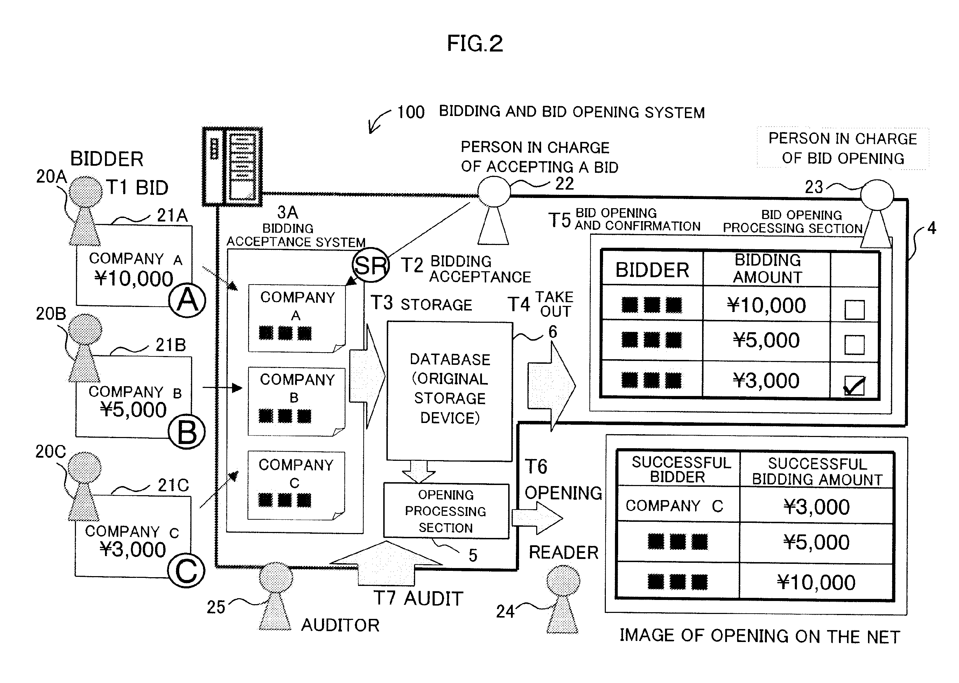

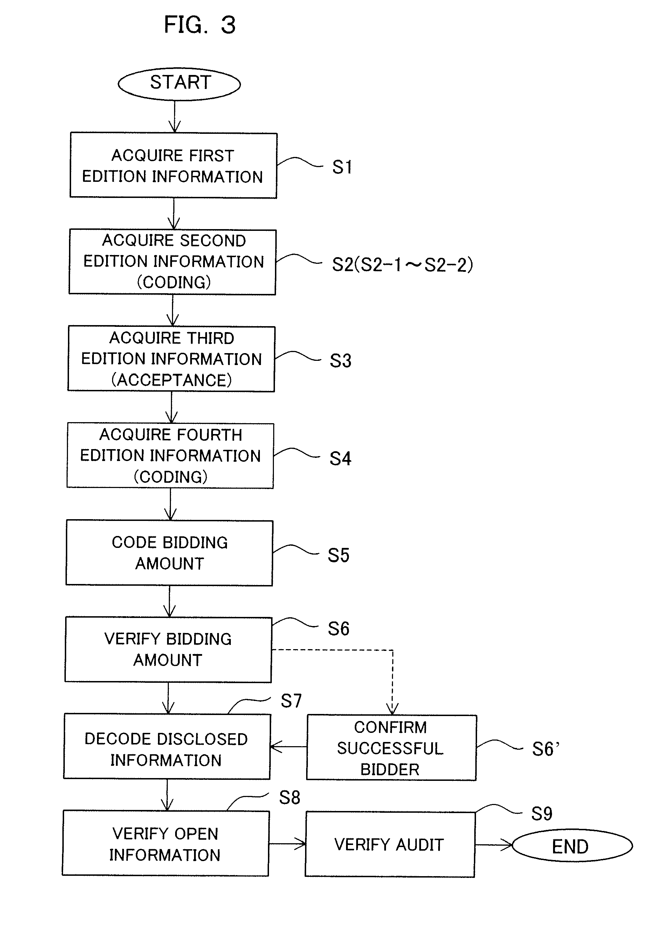

FIG. 1 is a block diagram of a bidding/bid opening system (hereinafter referred to as the bidding and bid opening system) in the embodiment of the present invention. FIG. 2 is an explanatory view showing an outline of an operation form of the embodiment of the present invention. FIG. 3 is a flowchart showing operation of the embodiment.

As shown in FIG. 1, a bidding and bid opening system 100 of the embodiment includes a data receiving section 1, a data processing section 2, an acceptance processing section 3, a bid opening processing section 4, an opening processing section 5, and a database 6. The data receiving section 1 receives bidding information. The data processing section 2 carries out a variety of data processing which will be described later in a system. The acceptance processing section 3 accepts a bid in cooperation with a person in charge of accepting a bid. The bid opening processing section 4 carries out bid opening processing in cooperation with a person 23 in charge of opening bids at the time of bid opening. The opening processing section 5 opens a result of bid opening to a reader 24. The database 6 stores bidding information and data of a variety of acquired information. The data processing section 2 includes a PIAT signature generation section 2a, a PIAT signature verification section 2b, and a coding/decoding section 2c. The PIAT signature generation function 2a generates a PIAT signature which will be described later. The PIAT signature verification function 2b verifies the PIAT signature. The coding/decoding section 2c carries out coding and decoding of information data.

In FIG. 2, a bid accepting system 3A includes the data receiving section 1 and the acceptance processing section 3. The bid accepting system 3A receives bidding information from bidder's side clients 21A to 21C that are used by bidders 20A to 20C for a bid T1. Then, the bid accepting system 3A carries out bid acceptance T2 in cooperation with a person 22 in charge of accepting a bid. Then, the bid opening processing section 4 carries out bid opening processing in cooperation with the person 23 in charge of bid opening at the time of bid opening T5, and the opening processing section 5 carries out opening T6 of a result of the bid opening to the reader 24. In addition, in case an auditor 25 performs an audit T7, verification is carried out for audit based on a variety of information obtained from the database of the bidding and bid opening system 100.

Hereinafter, operation and a function of the embodiment of the present invention will be described in detail with reference to FIGS. 3 to 16.

### (At the time of bidding (first edition information is acquired): S1)

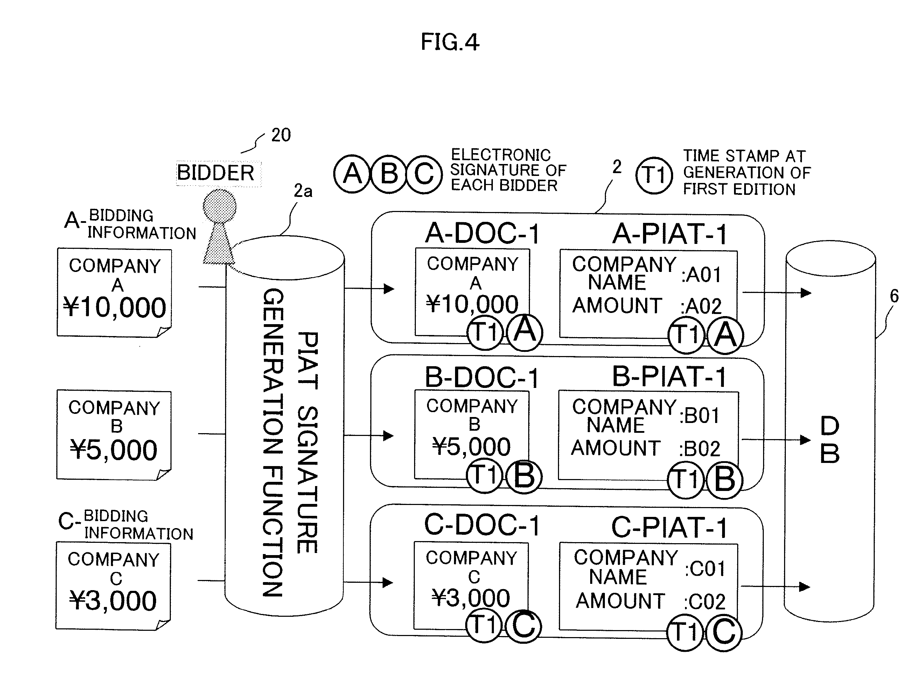

At the time of bidding, the bidding and bid opening system 100 first receives bidding information (A to C bidding information) from each bidder as shown in FIGS. 3 and 4. Then, the bidding and bid opening system 100 generates partial identification information (information that shows each section of bidding (original) information and a matter described in such each section in an identifiable manner) from the bidding information. The partial identification information calculates hash information of each section (which may be a letter, an element in case of XML data) of the bidding information, so that whether such each section has been changed or not can be checked. Also, the partial identification information describes positional information that shows which section in the bidding information the hash information corresponds to.

Then, a group of pieces of hash information with respect to each item is recorded as signature information. Hereinafter, the above function (the function to calculate hash information with respect to each item of bidding information and generate a group of pieces of the hash information with respect to each item as signature information) will be referred to as a "PIAT signature generation function" 2a, and generated signature information will be referred to as a "PIAT signature".

According to the PIAT signature information, whether a bidding order has been modified or not can be detected, and a modified section (modified position) can be identified. In addition, it is possible to prove to a third party that sections other than the modified section are not modified. A content of bidding information should not be easily inferred from the PIAT signature information. Accordingly, the PIAT signature information is preferably generated by, for example, combining a one-way hash function and a random number.

For example, a character string of "Company_A" is linked to a random number "XYZ". Then, hash information, for example, "A01" is generated with respect to a character string "XYZCompany_A". After the above, similar generation processing is carried out with respect to other items as well. Although a random number is used in the above example, a method other than the method of using a random number may be used in order to achieve the above object. For example, time information, such as the time stamp, showing that input is carried out at the time indicated by such time information may be used.

Bidding information (A to C-DOC-1) and the PIAT signature (A to C-PIAT-1) are provided with an electronic signature of a bidder and the time stamp (T1) indicating a time point thereof, and stored in the DB (original storage device) 6 as a first edition. In the embodiment, the PIAT signature generation function 2a is described as one function in the bidding and bid opening system 100. However, this function may be included in the clients 21A to 21C (bidder's side computers) on the bidders' side.

### (Before accepting a bid (second edition information is acquired): S2)

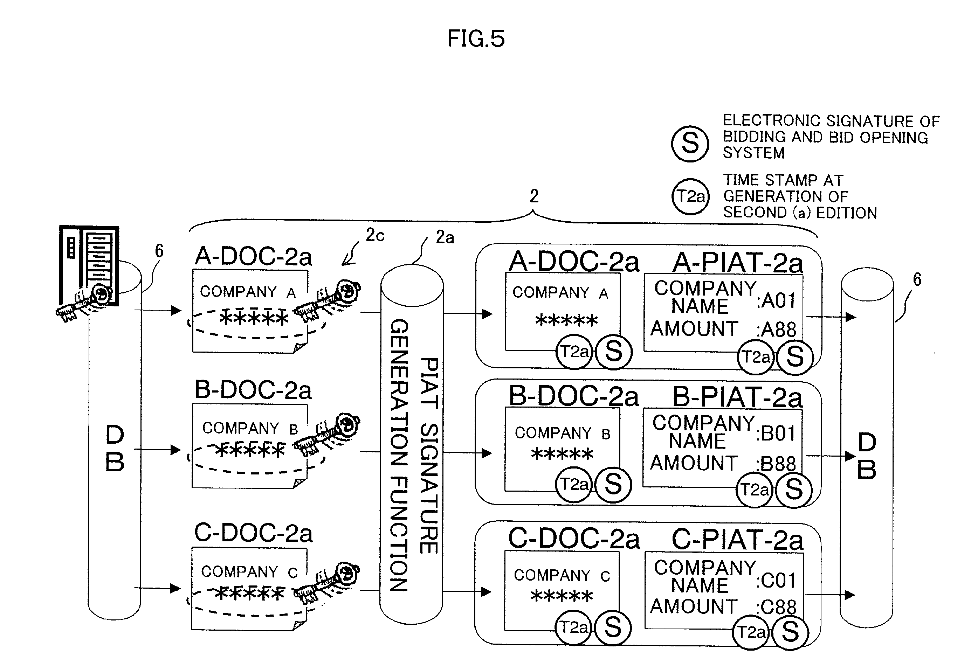

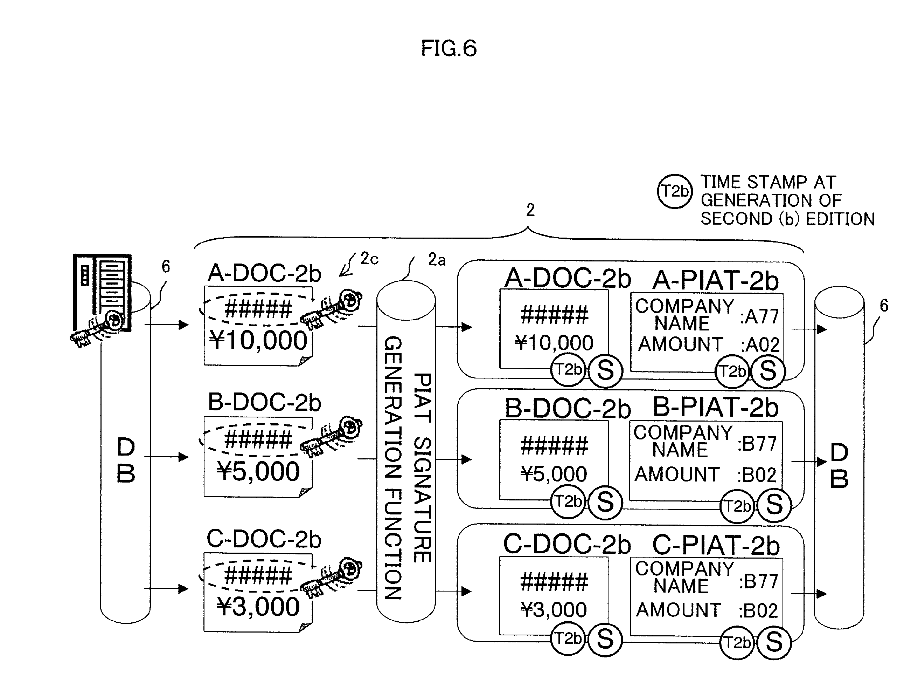

Next, as shown in FIGS. 5 and 6, the bidding and bid opening system 100 carries out two types of processing described below as processing of the bidding and bid opening system 100 itself before accepting a bid, at the same time as receiving bidding information from the bidders 20A to 20C.

### (Processing A: S2-1)

Coding of a bidding amount in order to prevent collusion between a bidder and a person in charge of accepting a bid at the time a bid is accepted (FIG. 5).

### (Processing B: S2-2)

Coding of a bidder in order to verify in an ex post facto manner that a bid opening processing is carried out by using information at the time of bidding (FIG. 6).

Here, information generated in Processing B in particular is used for verification of validity of a bidding amount at the time of bid opening.

### (Processing A: S2-1)

A detail of the above Processing A will be described with reference to FIG. 5. At this stage, for the purpose of preventing collusion between a bidder and a person in charge of accepting a bid at the time of accepting a bid, a pair of the bidding information (A to C-DOC-1) and the PIAT signature (A to C-PIAT-1) of the first edition stored in the DB 6 are taken out, and then the bidding and bid opening system 100 itself carries out coding (sanitizing) processing with respect to a bidding amount section.

The term "coding" here means coding processing applied to a bidding amount section of each bidder by using an encryption key only the bidding and bid opening system 100 can know that is prepared separately. By applying the coding processing with respect to a bidding amount section in the above manner, a person in charge of accepting a bid cannot refer to a bidding amount at the time of accepting a bid. Accordingly, collusion with a bidder can be prevented.

With bidding information (A to C-DOC-2a) obtained by applying the coding processing to a bidding amount section of each bidder as a second (a) edition, hash information with respect to each item of the bidding information is calculated by using the PIAT signature generation function 2a in a similar manner as the case of the first edition. Then, a group of hash information with respect to each item is recorded as the PIAT signature (A to C-PIAT-2a).

Further, each of the bidding information (A to C-DOC-2a) and the PIAT signature (A to C-PIAT-2a) provides an electronic signature of the bidding and bid opening system 100 and a time stamp (T2a) at a time point thereof, and stores the electronic signature and the time stamp in the DB 6 as the second (a) edition.

### (Processing B: S2-2)

A detail of the above Processing B will be described with reference to FIG. 6. At this stage, for the purpose of verifying that the bid opening processing is applied by using information at the time of bidding in an ex post facto manner, a pair of the bidding information (A to C-DOC-1) and the PIAT signature (A to C-PIAT-1) of the first edition stored in the DB 6 are taken out, and then the bidding and bid opening system 100 itself carries out coding (sanitizing) processing with respect to a bidder section.

The "coding" here means coding processing applied to a bidder section of each bidder by using an encryption key only the bidding and bid opening system 100 can know that is prepared separately. Processing similar to the above is applied in Processing A as the processing before accepting a bid. The encryption key may be separately prepared for each item, such as for a bidder and for a bidding amount, or may be the same. However, a mechanism is necessary in the bidding and bid opening system 100 in order to securely protect storage of the encryption key. By applying the coding processing with respect to a bidder section, validation of a bidding amount at the time of bid opening can be verified.

With bidding information (A to C-DOC-2b) obtained by applying the coding processing to each bidder section as a second (b) edition, the bidding and bid opening system 100 calculates hash information with respect to each item of the bidding information by using the PIAT signature generation function in a similar manner as the case of the first edition. Then, a group of hash information with respect to each item is recorded as the PIAT signature (A to C-PIAT-2b). Then, each of the bidding information (A to C-DOC-2b) and the PIAT signature (A to C-PIAT-2b) provides the electronic signature of the bidding and bid opening system 100 and a time stamp (T2b) at a time point thereof, and stores the electronic signature and the time stamp in the DB 6 as the second (b) edition.

At this time point, the second edition is managed in two systems, the second (a) edition and the second (b) edition. The second (a) edition is used as information for preventing collusion between a bidder and a person in charge of accepting a bid at the time of accepting a bid. The second (b) edition is used as information for verifying validity of a bidding amount at the time of bid opening.

### (At the time of accepting a bid (third edition information is acquired): S3)

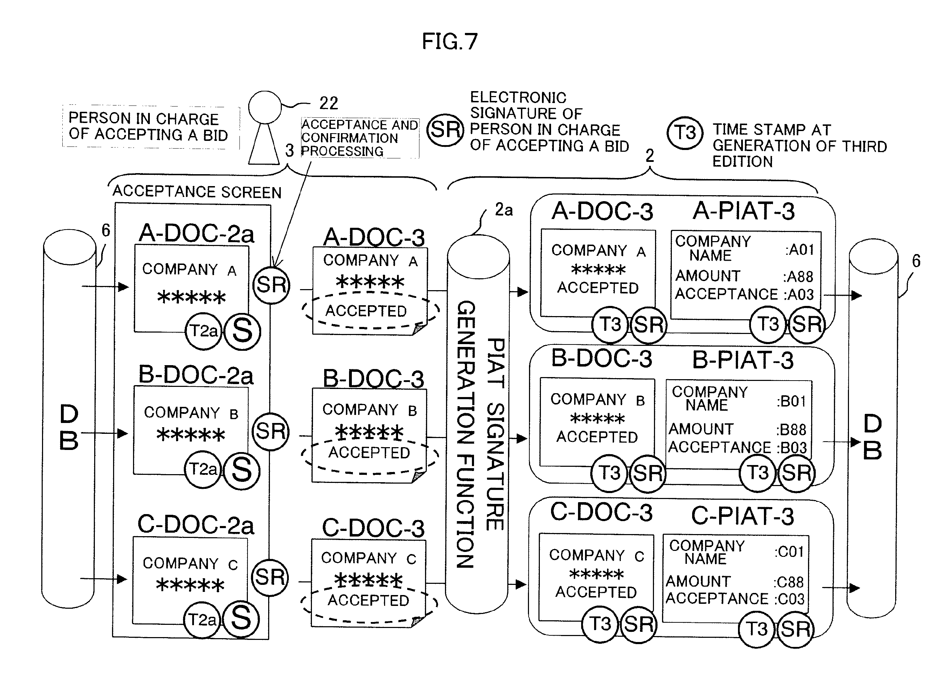

A detail of accepting a bid will be described with reference to FIG. 7. At the time of accepting a bid, a pair of the bidding information (A to C-DOC-2a) and the PIAT signature (A to C-PIAT-2a) of the second (a) edition stored in the DB 6 are taken out. Then, the person 22 in charge of accepting a bid checks a content of the bidding information and the PIAT signature on an acceptance screen of the acceptance processing section 3.

At this time, the electronic signature of the bidding and bid opening system 100 and the time stamp at the time thereof are verified. In this manner, it is possible to check that the bidding and bid opening system 100 has received a bid from a bidder properly. Since a bidding amount is concealed at this time point, collusion between a bidder and a person in charge of accepting a bid can be prevented.

That is, the above is equivalent to a situation where a sheet on which a bidding amount is specified is put into an envelope, and the name of a bidder (a company and the like) is specified on an outer surface of the envelop, as seen in a bidding act using the envelope in real society. Here, what a person in charge of accepting a bid does is similar to pressing a reception stamp on the envelope. Accordingly, the person in charge of accepting a bid cannot check a bid amount of each bidder at this stage.

When the person 22 in charge of accepting a bid carries out the accepting processing, the bidding and bid opening system 100 partly adds an item indicating that the bidding has been accepted to the bidding information (A to C-DOC-2a) of the second (a) edition to generate bidding information (A to C-DOC-3) of a third edition. The bidding and bid opening system 100 calculates hash information with respect to each item of the bidding information by using the PIAT signature generation function 2a in a similar manner as the case of the first edition. Then, the bidding and bid opening system 100 records a group of hash information of each item as the PIAT signature (A to C-PIAT-3).

Further, the bidding and bid opening system 100 provides an electronic signature of a person in charge of accepting a bid and a time stamp (T3) at a time point thereof to each of the bidding information (A to C-DOC-3) and the PIAT signature (A to c-PIAT-3) and stores the bidding information and the PIAT signature in the DB 6 as the third edition.

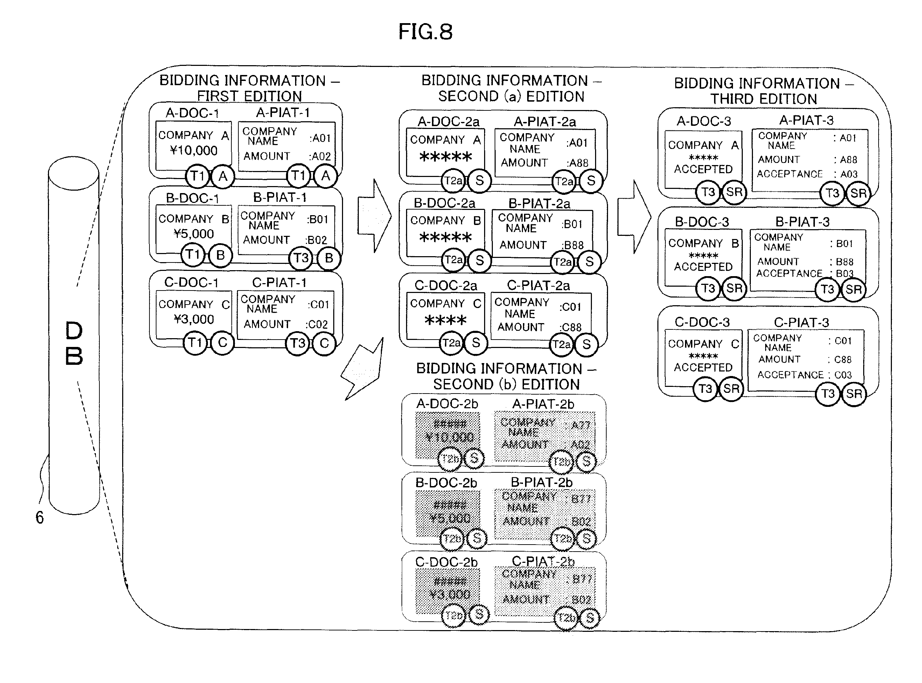

FIG. 8 shows a storage state in the DB 6 at the time the bid accepting processing is completed (generation of the third edition is completed). As seen from FIG. 8, the second edition is separated into and managed in two systems, the second (a) edition and the second (b) edition.

### Before bid opening (fourth edition information is acquired): S4)

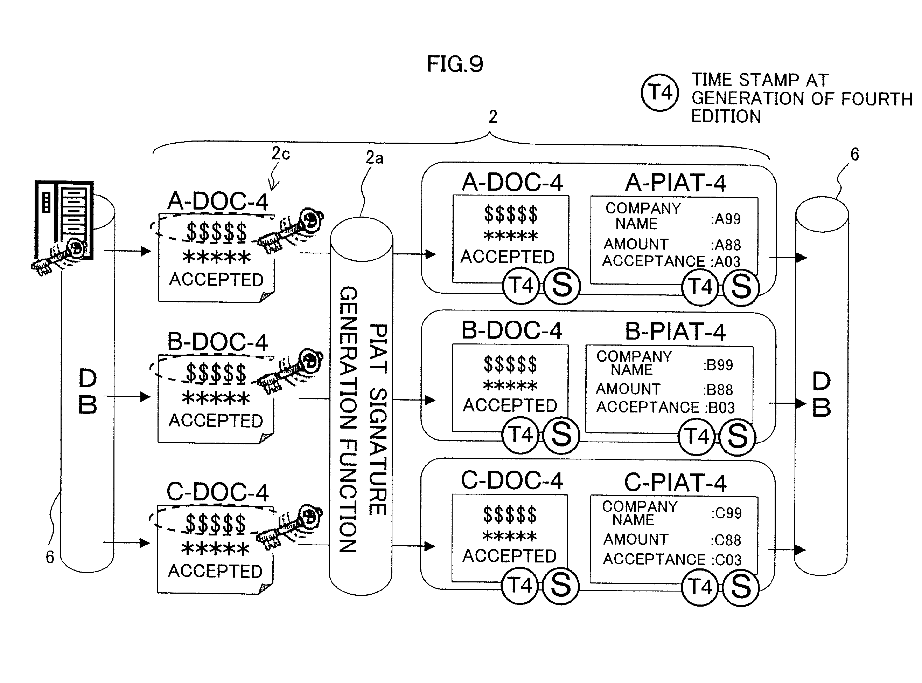

FIG. 9 shows operation of acquiring a fourth edition by carrying out bid coding processing in processing before bid opening. At this stage, for the purpose of preventing collusion between a bidder and a person in charge of bid opening at the time of bid opening, a pair of the bidding information (A to C-DOC-3) and the PIAT signature (A to C-PIAT-3) of the third edition stored in the DB 6 are taken out, and then the bidding and bid opening system 100 itself carries out coding (sanitizing) processing with respect to a bidder section. The "coding" here means coding processing applied to a bidder section of each bidder by using an encryption key only the bidding and bid opening system 100 can know that is prepared separately.

By applying the coding processing with respect to a bidder section in the above manner, a person in charge of bid opening cannot refer to information of each bidder at the time of bid opening. Accordingly, collusion with a bidder can be prevented.

With bidding information (A to C-DOC-4) obtained by applying the coding processing to each bidder section as a fourth edition, the bidding and bid opening system 100 calculates hash information with respect to each item of the bidding information by using the PIAT signature generation function 2a in a similar manner as the case of the first edition. Then, a group of hash information with respect to each item is recorded as the PIAT signature (A to C-PIAT-4). In addition, the bidding and bid opening system 100 provides an electronic signature of the bidding and bid opening system and a time stamp (T4) at a time point thereof to each of the (A to C-DOC-4) and the PIAT signature (A to C-PIAT-4) and stores the (A to C-DOC-4) and the PIAT signature in the DB 6 as the fourth edition.

### (Bidding amount decoding: S5)

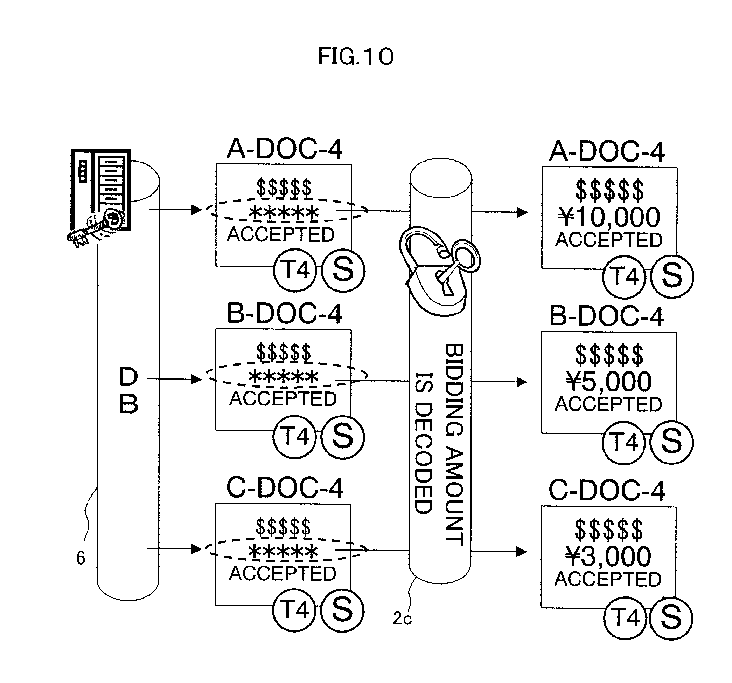

FIG. 10 is a view showing bidding amount decoding processing. At this stage, a pair of the bidding information (A to C-DOC-4) and the PIAT signature (A to C-PIAT-4) of the fourth edition stored in the DB 6 are taken out. Then, decoding processing is carried out with respect to the coded bidding amount section. The bidding and bid opening system 100 takes out a key used for coding at the time of acquiring the fourth edition to decode the bidding amount section.

### (At bid opening)

### (Biding amount verification: S6)

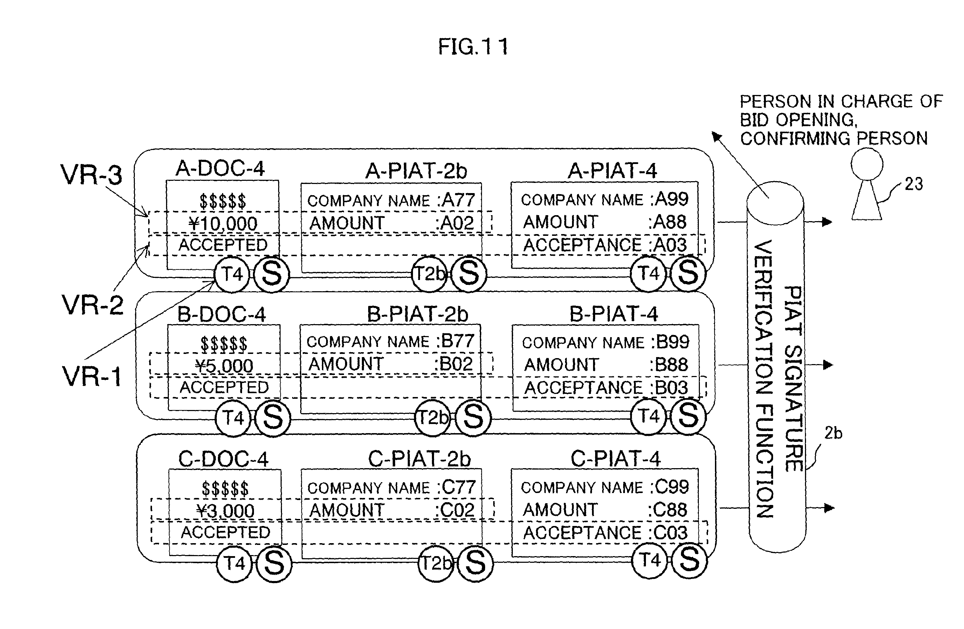

FIG. 11 is a view showing bidding amount verification processing. At this stage, a person in charge of bid opening checks that a bidding amount (bidding information) is properly processed by using information at the time of bidding. As information for verifying validity of a bidding amount, the bidding information (A to C-DOC-4), and the PIAT signature (A to C-PIAT-4) of the fourth edition, and the PIAT signature (A to C-PIAT-2b) of the second (b) edition are used.

First, the electrical signature and the time stamp provided to the above three pieces of information are verified. Then, it is checked that the three pieces of information are not modified in an ex post facto manner (VR-1 in FIG. 11).

Next, hash information with respect to an accepted section in the bidding information (A to C-DOC-4) of the fourth edition is calculated, and hash information (A03) of an accepted section in the PIAT signature (A to C-PIAT-4) is taken out. Then, comparison and verification of both of the above pieces of information are carried out (VR-2 in FIG. 11). When the comparison and verification result in that the both pieces of information are the same, the bidding information is confirmed to be properly accepted.

Further, hash information with respect to a bidding amount section in the bidding information (A to C-DOC-4) of the fourth edition is calculated, and hash information (A02) of a bidding amount section in the PIAT signature (A to C-PIAT-4) is taken out. Then, comparison and verification of both of the above pieces of information are carried out (VR-3 in FIG. 11). When the comparison and verification result in that the both pieces of information are the same, the bidding amount is confirmed to be properly processed by using information at the time of bidding.

The VR-1 to VR-3 are provided as the PIAT signature verification function 2b. Here, a reason for generating and maintaining the A to C-PIAT-2b will be mentioned again. By using each piece of information of the A to C-PIAT-1, it is possible to check that a bidding amount is properly processed by using information at the time of bidding. However, since the electronic signature of each bidder is provided to the A to C-PIAT-1, the information of the A to C-PIAT-1 cannot be used for verification of a bidding amount at this time point. This is because if the information can be used for verification, a person in charge of bid opening can check who bid how much amount by checking the electronic signature (VR-1 in FIG. 11). Therefore, the bidding and bid opening system itself generates and maintains in advance the A to C-PIAT-2b. In this manner, bidding information can be used for verification of a bidding amount at this stage while information of a bidder is concealed.

### (Confirmation of a successful bidder: S6')

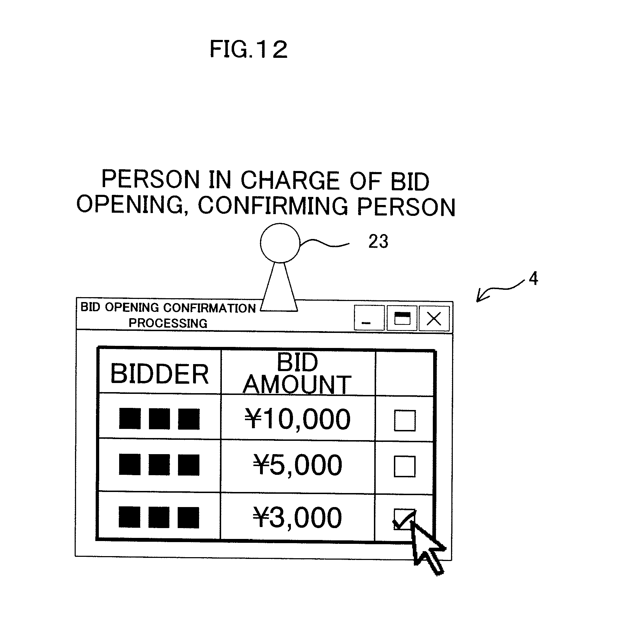

FIG. 12 is a view showing a successful bidder confirmation processing using the bid opening processing section 4. At this stage, the person 23 in charge of opening a bid checks validity of a bidding amount, and then carries out winning confirmation processing with reference to each bidding amount. This example shows a case in which a bidder who has bid ¥3,000 wins a bid. In actuality, information of a bidder is concealed by being applied with coding processing at a stage of bidder coding before bid opening of S2. Accordingly, a person in charge of bid opening cannot make a contact with a bidder with respect to a bidding amount. In this manner, collusion with a bidder can be prevented.

### (Before opening a result of a successful bid)

### (Disclosed information decoding: S7)

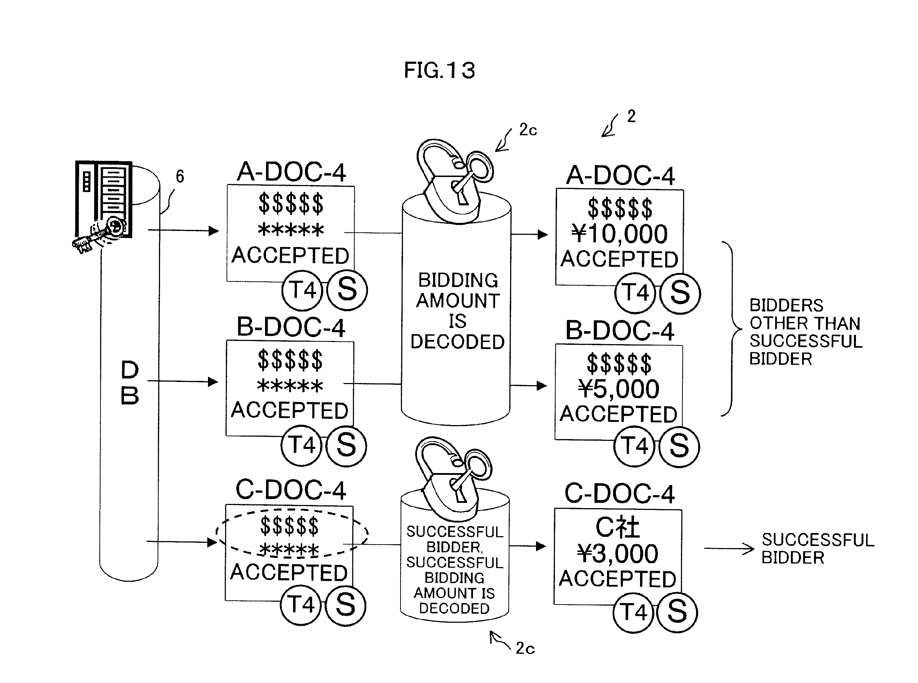

FIG. 13 is a view showing disclosed information decoding processing before opening of a result of a successful bid. At this stage, only information necessary for disclosure is decoded for the purpose of protecting privacy information, since a result of a successful bid is opened to a third party such as a reader. The bidding information (A to C-DOC-4) of the fourth edition stored in the DB 6 is taken out, and decoding processing is carried out with respect to a coded section.

More specifically, the bidding and bid opening system 100 takes out a key used at the time of coding. Then, the bidding and bid opening system 100 decodes only a bidding amount section with respect to information of bidders except a successful bidder (in the present example, the company C has been already confirmed to have won a bid, and therefore, the company A and company B have been confirmed to be the bidders except the successful bidder). In addition, the bidding and bid opening system 100 decodes both information of the successful bidder and a successful bidding amount with respect to information of the successful bidder (in the present example, the company C has already confirmed to have won a bid). In this example, only a bidding amount is disclosed with respect to the bidders other than the successful bidder, and all the information is disclosed with respect to the successful bidder. By adopting a system such as above, flexible handling is possible. For example, all the information including a bidding amount with respect to the bidders other than the successful bidder may be concealed, and only the successful bidder and the successful bidding amount may be disclosed.

### (Open information verification: S8)

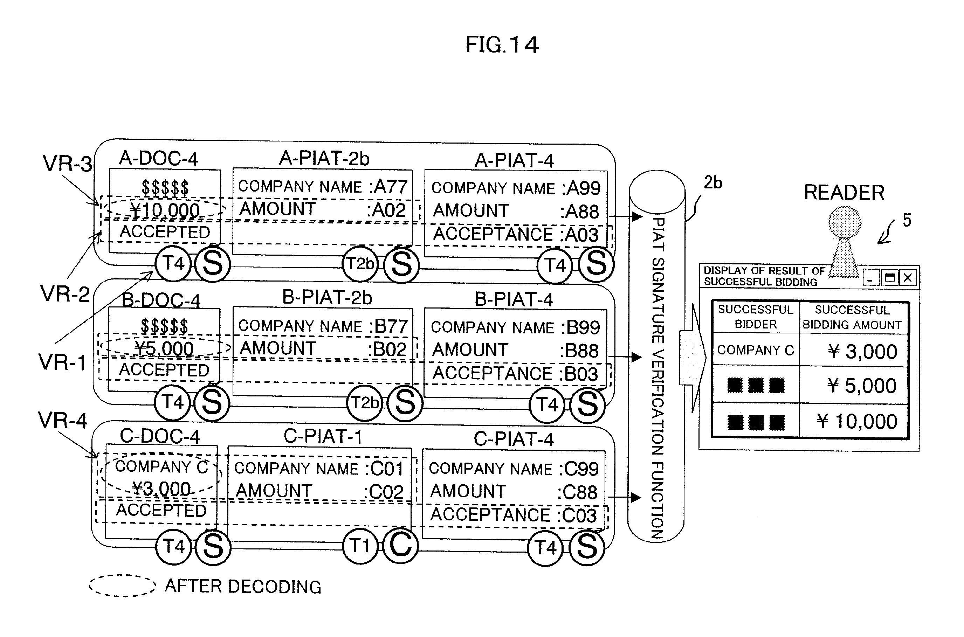

FIG. 14 is a view showing open information verification processing. At this stage, even when part of information is concealed, a third party such as a reader can check validity of the result of bid opening. As information for verifying validity of a result of bid opening, the bidding information (A to C-DOC-4) and the PIAT signature (A to C-PIAT-4) of the fourth edition, the PIAT signature (A to C-PIAT-2b) of the second (b) edition, and the PIAT signature (A to C-PIAT-1) of the first edition (not shown) are used. With respect to the PIAT signature (A to C-PIAT-1) of the first edition, the company C has already been confirmed to have won a bid at this time point. Accordingly, the PIAT signature (C-PIAT-1) of the first edition of the company C can be used. First, the electrical signature and the time stamp provided to the above three pieces of information are verified. Then, it is checked that the three pieces of information are not modified in an ex post facto manner (VR-1 in FIG. 14).

Next, hash information with respect to an accepted section in the bidding information (A to C-DOC-4) of the fourth edition is calculated, and hash information (A03) of an accepted section in the PIAT signature (A to C-PIAT-4) is taken out. Then, comparison and verification of both of the above pieces of information are carried out (VR-2 in FIG. 14). When the comparison and verification result in that the both pieces of information are the same, the bidding information is confirmed to be properly accepted.

Further, with respect to verification of a bidding amount, hash information with respect to a bidding amount section in the bidding information (A to C-DOC-4) of the fourth edition is calculated, and hash information (A02) of a bidding amount section in the PIAT signature (A to C-PIAT-4) is taken out. Then, comparison and verification of both of the above pieces of information are carried out (VR-3 in FIG. 14). When the comparison and verification result in that the both pieces of information are the same, the bidding amount is confirmed to be properly processed by using information at the time of bidding.

Further, with respect to the successful bidder and the successful bidding amount, the PIAT signature (C-PIAT-1) of the first edition of the company C can be used. Accordingly, proper processing using the information at the time of bidding with respect to both a company name and a bidding amount can be confirmed (VR-4 in FIG. 14) in addition to the verification of VR-3. The VR-1 to VR-4 are provided as the PIAT signature verification function 2b.

### (Audit verification: S9)

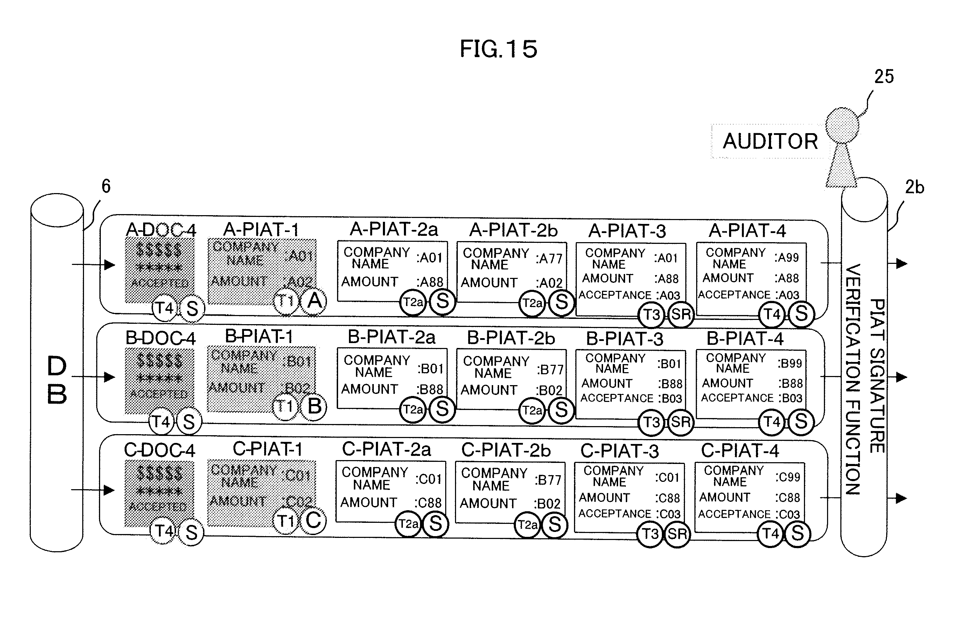

FIG. 15 is a view showing processing at the time of audit. At this stage, validity of a result of a successful bid is audited by a third party public institution or the like. More specifically, the bidding information (A to C-DOC-4) of the fourth edition and the PIAT signature (A to C-PIAT-1 to 3) of all the editions stored in the DB 6 are taken out, and audited by using the PIAT signature verification function.

When the PIAT signature verification is carried out by using the above pieces of information, validity of "which section", in addition to "when", "who", "what", and "how", can be verified. In addition, as similar to the bidding amount verification at the time of bid opening in S6, the disclosed information decoding before opening of a result of a successful bid in S7, and verification at opening of a result of a successful bid in S8, proper processing using the information at the time of bidding can be confirmed if the verification of VR-1 to VR-4 is carried out.

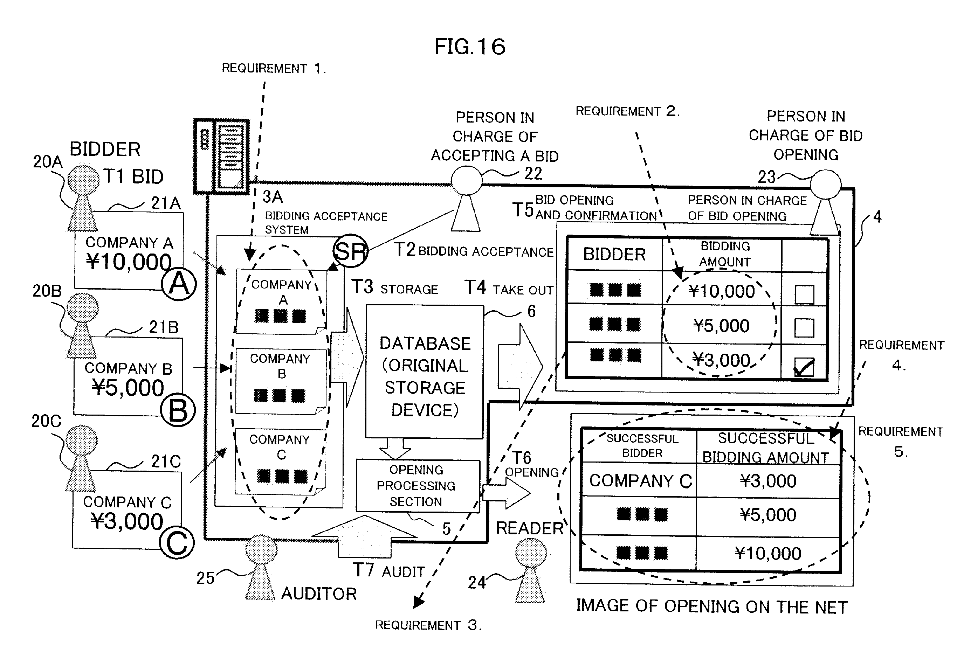

As described above, according to the present embodiment, five requirements described below can be clearly made effective as shown in FIG. 16.

### (Requirement 1)

Collusion between and fraudulence of a person in charge of accepting a bid and a bidder can be detected and prevented.

### (Requirement 2)

Proper bid opening processing using information at the time of bidding can be proved.

### (Requirement 3)

Collusion between and fraudulence of a person in charge of bid opening and a bidder can be detected and prevented.

### (Requirement 4)

Validity of a result of bid opening can be proved even when part of information is concealed.

### (Requirement 5)

Modification added to the original and the like can be proved with respect to "what section" the modification is made, in addition to "when", "who", "what", and "how".

By providing a program that allows a computer to execute each operation shown in the illustrated flowcharts and steps, the electronic bidding/bid opening program of the present invention can be provided. The above programs are recorded in a medium which can be read out by a computer, and can be executed by the computer. Here, the medium that can be read out by the computer includes a portable type storage medium, such as a CD-ROM, a flexible disk, a DVD disc, an magneto-optical disc, and an IC card, database that stores a computer program, or another computer and database thereof, and further an online transmission medium.

### Industrial Applicability

As described above, according to the present invention, validity of the bidding information can be verified, and whether the bidding information has been modified or not can be proved.

## Claims

1. An electronic bidding/bid opening program that allows a computer to execute bidding and bid opening processing based on bidding information created in electronic data, the program that allows a computer to execute:
a first edition information acquiring step that acquires the bidding information and partial identification information showing each section of the bidding information that can be identified by other sections, and registers the bidding information and the partial identification information as first edition bidding information and first edition partial identification information, respectively;
a second edition information acquiring step that acquires and registers second (a) edition bidding information obtained by coding a bidding amount section in the first edition bidding information acquired by the first edition information acquiring step and second (a) edition partial identification information showing each section of the second (a) edition bidding information in a manner identifiable from other sections, and second (b) edition bidding information obtained by coding a bidder section in the first edition bidding information and second (b) edition partial identification information showing each section of the second (b) edition bidding information in a manner identifiable from other sections;
a third edition information acquiring step that acquires and registers a third edition bidding information obtained by applying an electronic signature by a person in charge of accepting a bid with respect to the second (a) edition bidding information acquired by the second edition information acquiring step, and partial identification information showing each section of the third edition bidding information in a manner identifiable from other sections;
a fourth edition information acquiring step that acquires and registers fourth edition bidding information obtained by coding a bidder section in the third edition bidding information acquired by the third edition information acquiring step and fourth edition partial identification information that shows each section of the fourth edition bidding information in a manner identifiable from other sections; and
a verification step that verifies predetermined validity with respect to successful bid processing by a predetermined combination of information of any of a plurality of pieces of edition information acquired by the first to fourth edition information acquiring steps.

2. The electronic bidding/bid opening program according to claim 1, wherein
the verification step verifies a bidding amount at the time of bid opening based on the fourth edition bidding information acquired by the fourth edition information acquiring step and the second (b) edition partial identification information acquired by the second edition information acquiring step.

3. The electronic bidding/bid opening program according to claim 2, wherein
the verification step decodes a bidding amount section in the fourth edition bidding information acquired by the fourth edition information acquiring step and acquires partial identification information of the bidding amount section to compare the partial identification information with the second (b) partial identification information.

4. The electronic bidding/bid opening program according to claim 2, wherein
an electronic signature or a time stamp is attached to the information acquired in each of the information acquiring steps, and
the verification step uses the electronic signature or the time stamp to detect existence or non-existence of falsification.

5. The electronic bidding/bid opening program according to claim 2, wherein
the verification step discloses or does not disclose part of information depending on a successful bidder and bidders other than the successful bidder with respect to a result of a successful bid, and supports confirmation of validity of the information.

6. The electronic bidding/bid opening program according to claim 1, wherein
an electronic signature or a time stamp is attached to all the information acquired in each of the information acquiring steps, and the verification step uses the first edition partial identification information, the second (a) edition partial identification information, the second (b) edition partial identification information, the third edition partial identification information, the fourth edition bidding information, and the fourth edition partial identification information, to each of which an electronic signature or a time stamp is attached, to carry out verification for audit.

7. The electronic bidding/bid opening program according to claim 1, wherein
the partial identification information is acquired as hash information generated in a manner that bidding information is divided into a plurality of sections, and information of each section is generated by using a one-way hash function.

8. An electronic bidding/bid opening system that executes bidding and bid opening processing based on bidding information created in electronic data, comprising:
a first edition information acquisition section that acquires the bidding information and partial identification information showing each section of the bidding information that can be identified by other sections, and registers the bidding information and the partial identification information as first edition bidding information and first edition partial identification information, respectively;
a second edition information acquisition section that acquires and registers second (a) edition bidding information obtained by coding a bidding amount section in the first edition bidding information acquired by the first edition information acquisition section and second (a) edition partial identification information showing each section of the second (a) bidding information in a manner identifiable from other sections, and second (b) edition bidding information obtained by coding a bidder section in the first edition bidding information and second (b) edition partial identification information showing each section of the second (b) edition bidding information in a manner identifiable from other sections;
a third edition information acquisition section that acquires and registers third edition bidding information obtained by applying an electronic signature by a person in charge of accepting a bid with respect to the second (a) edition bidding information acquired by the second edition information acquisition section, and partial identification information showing each section of the third edition bidding information in a manner identifiable from other sections;
a fourth edition information acquisition section that acquires and registers fourth edition bidding information obtained by coding a bidder section in the third edition bidding information acquired by the third edition information acquisition section and fourth edition partial identification information that shows each section of the fourth edition bidding information in a manner identifiable from other sections; and
a verification section that verifies predetermined validity with respect to successful bid processing by a predetermined combination of information of any of a plurality of pieces of edition information acquired by the first to fourth edition information acquisition section.

9. The electronic bidding/bid opening system according to claim 8, wherein
the verification section verifies a bidding amount at the time of bid opening based on the fourth edition bidding information acquired by the fourth edition information acquisition section and the second (b) edition partial identification information acquired by the second edition information acquisition section.

10. The electronic bidding/bid opening system according to claim 9, wherein
the verification section decodes a bidding amount section in the fourth edition bidding information acquired by the fourth edition information acquisition section and acquires partial identification information of the bidding amount section to compare the partial identification information with the second (b) partial identification information.

11. The electronic bidding/bid opening system according to claim 9, wherein
an electronic signature or a time stamp is attached to the information acquired in each of the information acquisition sections, and
the verification section uses the electronic signature or the time stamp to detect existence or non-existence of falsification.

12. The electronic bidding/bid opening system according to claim 9, wherein
the verification section discloses or does not disclose part of information depending on a successful bidder and bidders other than the successful bidder with respect to a result of a successful bid, and supports confirmation of validity of the information.

13. The electronic bidding/bid opening system according to claim 8, wherein
an electronic signature or a time stamp is attached to all the information acquired in each of the information acquisition sections, and the verification section uses the first edition partial identification information, the second (a) edition partial identification information, the second (b) edition partial identification information, the third edition partial identification information, the fourth edition bidding information, and the fourth edition partial identification information, to each of which an electronic signature or a time stamp is attached, to carry out verification for audit.

14. The electronic bidding/bid opening system according to claim 8, wherein
the partial identification information is acquired as hash information generated in a manner that bidding information is divided into a plurality of sections, and information of each section is generated by using a one-way hash function.

15. An electronic bidding/bid opening method that allows a computer to execute bidding and bid opening processing based on bidding information created in electronic data, comprising:
a first edition information acquiring step that acquires the bidding information and partial identification information showing each section of the bidding information that can be identified by other sections, and registers the bidding information and the partial identification information as first edition bidding information and first edition partial identification information, respectively;
a second edition information acquiring step that acquires and registers second (a) edition bidding information obtained by coding a bidding amount section in the first edition bidding information acquired by the first edition information acquiring step and second (a) edition partial identification information showing each section of the second (a) bidding information in a manner identifiable from other sections, and second (b) edition bidding information obtained by coding a bidder section in the first edition bidding information and second (b) edition partial identification information showing each section of the second (b) edition bidding information in a manner identifiable from other sections;
a third edition information acquiring step that acquires and registers third edition bidding information obtained by applying an electronic signature by a person in charge of accepting a bid with respect to the second (a) edition bidding information acquired by the second edition information acquiring step, and partial identification information showing each section of the third edition bidding information in a manner identifiable from other sections;
a fourth edition information acquiring step that acquires and registers fourth edition bidding information obtained by coding a bidder section in the third edition bidding information acquired by the third edition information acquiring step and fourth edition partial identification information that shows each section of the fourth edition bidding information in a manner identifiable from other sections; and
a verification step that verifies predetermined validity with respect to successful bid processing by a predetermined combination of information of any of a plurality of pieces of edition information acquired by the first to fourth edition information acquiring steps.

16. The electronic bidding/bid opening method according to claim 15, wherein
the verification step verifies a bidding amount at the time of bid opening based on the fourth edition bidding information acquired by the fourth edition information acquiring step and the second (b) edition partial information acquired by the second edition information acquiring step.

17. The electronic bidding/bid opening method according to claim 16, wherein
the verification step decodes a bidding amount section in the fourth edition bidding information acquired by the fourth edition information acquiring step and acquires partial identification information of the bidding amount section to compare the partial identification information with the second (b) partial identification information.

18. The electronic bidding/bid opening method according to claim 15, wherein
an electronic signature or a time stamp is attached to the information acquired in each of the information acquiring steps, and
the verification step uses the electronic signature or the time stamp to detect existence or non-existence of falsification.

19. The electronic bidding/bid opening method according to claim 16, wherein
the verification step discloses or does not disclose part of information depending on a successful bidder and bidders other than the successful bidder with respect to a result of a successful bid, and supports confirmation of validity of the information.

20. The electronic bidding/bid opening method according to claim 15, wherein
an electronic signature or a time stamp is attached to all the information acquired in each of the information acquiring steps, and the verification step uses the first edition partial identification information, the second (a) edition partial identification information, the second (b) edition partial identification information, the third edition partial identification information, the fourth edition bidding information, and the fourth edition partial identification information, to each of which an electronic signature or a time stamp is attached, to carry out verification for audit.
